# EUROPÄISCHE PATENTANMELDUNG

(11) **EP 4 786 384 A1**
(43) Veröffentlichungstag der Anmeldung: **05.08.2026**
(21) Anmeldenummer: 26154912.5
(22) Anmeldetag: 29.01.2026
(51) Int. Cl.: B65G 47/256, B29C 49/42, B65G 47/84, B67C 7/00

(54) **BEHÄLTERBEHANDLUNGSANLAGE MIT BEHÄLTERAUSLEITFUNKTIONALITÄT**

(30) Priorität: 31.01.2025 DE 102025103681
(71) Anmelder: Krones AG, 93073 Neutraubling (DE)
(72) Erfinder: EGERER, Niklas, 93073 Neutraubling (DE); FLEISCHMANN, Hans-Juergen, 93073 Neutraubling (DE); HOELLRIEGL, Thomas, 93073 Neutraubling (DE); KOLLER, Juergen, 93073 Neutraubling (DE); SCHEIDLER, Ludwig, 93073 Neutraubling (DE); BRINSTER, Paul, 93073 Neutraubling (DE); SENN, Konrad, 93073 Neutraubling (DE); BAUER, Sascha, 93073 Neutraubling (DE); NUEBEL, Nicolas, 93073 Neutraubling (DE); NEUMANN, Toni, 93073 Neutraubling (DE)
(74) Vertreter: v. Bezold & Partner Patentanwälte - PartG mbB

(57) **Zusammenfassung**

Die Erfindung betrifft eine Behälterbehandlungsanlage (10) aufweisend mehrere Behälterbehandlungsvorrichtungen (14 - 24) zum Behandeln der Behälter und ein Behältertransportsystem (26), das die mehreren Behälterbehandlungsvorrichtungen (14 - 24) zum Transportieren der Behälter miteinander verbindet. Die Behälterbehandlungsanlage (10) weist ferner einen Sammelausleitförderer (28) mit einem umlaufenden Förderelement zum unterseitigen Abstützen von ausgeleiteten Behältern und mehrere Behälterausleiteinrichtungen (36), die den Sammelausleitförderer (28) mit mehreren Ausleitstellen des Behältertransportsystems (26) zum Empfangen von aus der jeweiligen Ausleitstelle des Behältertransportsystems (26) ausgeleiteten Behältern verbindet, auf.

## Beschreibung

### Technisches Gebiet

Die Erfindung betrifft eine Behälterbehandlungsanlage.

### Technischer Hintergrund

In modernen Behälterbehandlungsanlagen, wie beispielsweise Getränkeabfüllanlagen, spielen Behälterausleitungen eine entscheidende Rolle. Diese Vorrichtungen dienen dazu, den reibungslosen Betrieb der Anlage zu gewährleisten, indem sie fehlerhafte oder nicht den Qualitätsstandards entsprechende Behälter aus dem Produktionsfluss ausschleusen.

Der Aufbau einer Behälterausleitung kann mehrere Komponenten umfassen, wie bspw. Sensor(en) zur Fehlererkennung, eine Steuerungseinrichtung zur Verarbeitung der Sensordaten und Aktuator(en), die den Ausleitvorgang (Ausschleusvorgang) physisch durchführen. Die Sensoren können verschiedene Fehlerarten erkennen, wie etwa Beschädigungen, falsche Füllstände oder Etikettierungsfehler. Sobald ein fehlerhafter Behälter identifiziert wird, kann die Steuerungseinrichtung bspw. ein Signal an die Aktuatoren senden, die den Behälter aus dem Produktionsfluss entfernen.

Herkömmlich können ausgeleitete Behälter in dezentral angeordnete Kisten oder auf den Boden fallen. Der Füllstand der Kisten kann über Zähler erfasst werden. Bei entsprechender Füllmenge müssen die Kisten vom Bediener entleert werden.

Nachteilig an dieser herkömmlichen Technik ist, dass, insbesondere bei hohen Leistungen und den damit verbundenen, vermehrten Behälterausleitungen, die Kisten vom Bediener sehr häufig geleert werden müssen. Kommt der Bediener nicht rechtzeitig zum Leeren der Kisten, stoppt die jeweilige Maschine die Produktion. Das häufige Ausleeren bindet Mitarbeiter und verlängert die Fehlerbehebungszeit. Teilweise werden die Kisten zu spät oder gar nicht ausgeleert, wodurch ein Produktionsausfall entsteht. Der Füllstand muss manuell zurückgesetzt werden, um eine unterbrechungsfreie Produktion gewährleisten zu können. Auch besteht mitunter ein großer Konstruktionsaufwand, um die Kisten sicherheitsgerichtet anordnen und entnehmen zu können und um die Zugänglichkeit zu der Maschine zu gewährleisten. Im Fall eines Defektes oder einer Funktionsstörung kann sich in bestimmten Anwendungen ein Rückstau der ausgeleiteten Behälter bilden. Dieser Rückstau kann sich bis zur Ausleitstelle an dem Transportförderer aufbauen und somit zu einer Kollision mit dem Transportförderer führen.

Die WO 2016/075398 A1 betrifft eine Anlage zur Herstellung von Behältern aus Vorformlingen aus thermoplastischem Material. Die Anlage umfasst eine Mahlvorrichtung, die in die Anlage integriert ist, um die Behälter und die durch mindestens eine Entnahmevorrichtung entnommenen Vorformlinge zu mahlen.

Der Erfindung liegt die Aufgabe zu Grunde, eine Behälterbehandlungsanlage mit einer verbesserten Behälterausleitfunktionalität zu schaffen. Bevorzugt soll die Behälterbehandlungsanlage zumindest einige der oben genannten Nachteile überwinden.

### Zusammenfassung der Erfindung

Die Aufgabe wird gelöst durch die Merkmale des unabhängigen Anspruchs 1. Vorteilhafte Weiterbildungen sind in den abhängigen Ansprüchen und der Beschreibung angegeben.

Ein Aspekt betrifft eine Behälterbehandlungsanlage. Die Behälterbehandlungsanlage weist mehrere (z. B. Rundläufer-) Behälterbehandlungsvorrichtungen (z. B. Behälterherstellvorrichtung und/oder Behälteretikettiervorrichtung und/oder Behälterfüllvorrichtung(en) und/oder Behälterverschließvorrichtung(en)) zum Behandeln der Behälter auf. Die Behälterbehandlungsanlage weist ein Behältertransportsystem auf, das die mehreren Behälterbehandlungsvorrichtungen zum Transportieren der Behälter miteinander verbindet. Die Behälterbehandlungsanlage weist ferner einen (z. B. Linear-) Sammelausleitförderer mit einem umlaufenden Förderelement (z. B. Förderband, Mattenkette usw.) zum unterseitigen Abstützen von ausgeleiteten (z. B. fehlerhaften oder sich rückstauenden) Behältern auf. Die Behälterbehandlungsanlage weist ferner mehrere Behälterausleiteinrichtungen auf, die den Sammelausleitförderer mit mehreren (z. B. zwei, drei, vier oder mehr) Ausleitstellen des Behältertransportsystems zum Empfangen von aus der jeweiligen Ausleitstelle des Behältertransportsystems ausgeleiteten Behältern verbindet.

Vorteilhaft ermöglicht diese Technik, dass Bedienereingriffe aufgrund größerer Pufferkapazität durch die Sammelausleitung verringert werden können. Vorteilhaft können somit Maschinenstillstände massiv reduziert werden. Auffangbehältnisse am Ende des Sammelausleitförderers können sehr viel größer sein und zudem gut zugänglich an zentraler Stelle in der Behälterbehandlungsanlage angeordnet sein. Vorteilhaft kann auch die Möglichkeit der weiteren Automatisierung durch bspw. fahrerlose Transportfahrzeuge, die die ausgeleiteten Behälter außerhalb der Behälterbehandlungsvorrichtungen beispielsweise an einem Ende des Sammelausleitförderers abholen können, bestehen. Vorteilhaft ergeben sich auch geringere Aufwände für eine sicherheitsgerichtete Konstruktion der Behälterbehandlungsvorrichtungen und des Behältertransportsystems, auch bezüglich der Ermöglichung der Zugänglichkeit zu den Maschinen.

In einem Ausführungsbeispiel ist mindestens eines erfüllt von:
- die mehreren Behälterausleiteinrichtungen sind voneinander beabstandet mit dem Sammelausleitförderer verbunden;
- die mehreren Ausleitstellen sind voneinander beabstandet;
- die mehreren Behälterausleiteinrichtungen weisen teilweise oder jeweils ein betätigbares Ausleitelement, vorzugsweise Pusher, Stößel oder Schieber, zum Ausleiten von (z. B. fehlerhaften) Behältern aus dem Behältertransportsystem auf; und
- die mehreren Behälterausleiteinrichtungen weisen teilweise oder jeweils eine Rutsche zum Hinunterrutschen für die ausgeleiteten Behälter auf, vorzugsweise zum Rutschen auf das umlaufende Förderelement des Sammelausleitförderers.

Vorteilhaft kann mit den Rutschen eine kinetische Energie der ausgeleiteten Behälter nach Möglichkeit erhalten werden, um die Ausleitstellen frei zu halten und einen Rückstau zu verhindern.

Bevorzugt kann mindestens einer der Ausleitstellen bzw. mindestens einer der Ausleitelemente eine Sensorik zum Erfassen der Behälter und eine Steuereinrichtung zum Betätigen der jeweiligen Ausleitstelle bzw. des jeweiligen Ausleitelements zum Ausleiten eines Behälters aus einem Normal-Behälterstrom (aus dem Behältertransportsystem) in Abhängigkeit von einer Signalausgabe der Sensorik, die bspw. einen fehlerhaften Behälter angibt, zugeordnet sein.

Beispielsweise weist das Behältertransportsystem mindestens eines auf von:
- einen Einlaufförderer, vorzugsweise Einlaufstern, wobei der Einlaufförderer zum Zuführen von Vorformlingen zu einer Heizeinrichtung angeordnet ist und eine der mehreren Ausleitstellen aufweist;
- einen Einlaufförderer, vorzugsweise Einlaufstern, wobei der Einlaufförderer zum Zuführen von Vorformlingen zu einer Behälterherstellvorrichtung angeordnet ist und eine der mehreren Ausleitstellen aufweist;
- einen Auslaufförderer, vorzugsweise Auslaufstern, wobei der Auslaufförderer zum Abtransportieren von Behältern von einer Behälterherstellvorrichtung angeordnet ist und eine der mehreren Ausleitstellen aufweist;
- einen Verbindungsförderer, vorzugsweise Verbindungstransportstern, wobei der Verbindungsförderer zum Transportieren von Behältern zu einer Behälteretikettiervorrichtung angeordnet ist und eine der mehreren Ausleitstellen aufweist;
- einen Verbindungsförderer, vorzugsweise Verbindungstransportstern, wobei der Verbindungsförderer zum Abtransportieren von Behältern von einer Behälteretikettiervorrichtung angeordnet ist und eine der mehreren Ausleitstellen aufweist;
- einen Verteilförderer vorzugsweise Verteiltransportstern, wobei der Verteilförderer zum Aufteilen von Behältern auf eine erste Behälterfüllvorrichtung und eine zweite Behälterfüllvorrichtung angeordnet ist und eine der mehreren Ausleitstellen aufweist;
- einen Verbindungsförderer, vorzugsweise Verbindungstransportstern, wobei der Verbindungsförderer eine (z. B. die erste) Behälterfüllvorrichtung und eine (z. B. erste) Behälterverschließvorrichtung verbindet und eine der mehreren Ausleitstellen aufweist;
- einen Verbindungsförderer, vorzugsweise Verbindungstransportstern, wobei der Verbindungsförderer die zweite Behälterfüllvorrichtung und eine zweite Behälterverschließvorrichtung verbindet und eine der mehreren weiteren Ausleitstellen aufweist;
- einen Ausgabeförderer, vorzugsweise Linearausgabeförderer, wobei der Ausgabeförderer mit einer (z. B. der ersten) Behälterverschließvorrichtung zum Empfangen von verschlossen Behältern verbunden ist und eine der mehreren Ausleitstellen aufweist; und
- einen Ausgabeförderer, vorzugsweise Linearausgabeförderer, wobei der Ausgabeförderer mit der zweiten Behälterverschließvorrichtung zum Empfangen von verschlossen Behältern verbunden ist und eine der mehreren weiteren Ausleitstellen aufweist

Vorteilhaft können die hierin offenbarten Techniken bezüglich der Sammelausleitung von Behältern somit in einer Vielzahl von unterschiedlichen und miteinander kombinierbaren Anwendungsszenarien angewendet werden.

In einem weiteren Ausführungsbeispiel weist die Behälterbehandlungsanlage ferner ein Sammelauffangbehältnis auf, das mit dem Sammelausleitförderer zum Empfangen der ausgeleiteten (z. B. unzerkleinerten oder zerkleinerten) Behälter verbunden ist. Vorzugsweise kann das Sammelauffangbehältnis mit einer Presse zum Verdichten der ausgeleiteten (z. B. unzerkleinerten oder zerkleinerten) Behälter verbunden sein. Optional kann die Behälterbehandlungsanlage ferner eine Zerkleinerungseinrichtung zum Zerkleinern der ausgeleiteten Behälter aufweisen. Beispielsweise kann die Zerkleinerungseinrichtung mit dem Sammelausleitförderer zum Empfangen der ausgeleiteten Behälter und mit dem Sammelauffangbehältnis zum Ausgeben der zerkleinerten Behälter zu dem Sammelauffangbehältnis verbunden sein. Alternativ oder zusätzlich zu der Zerkleinerungseinrichtung ist es beispielsweise möglich, dass die Behälterbehandlungsanlage ferner ein fahrerloses Transportfahrzeug aufweist, das zum Transportieren des Sammelauffangbehältnisses konfiguriert ist. Vorteilhaft kann auf diese Weise eine zentrale und vereinfachte, bevorzugt automatisierte, Entsorgung der ausgeleiteten Behälter erfolgen. Durch die Zerkleinerung kann neben dem Volumen vorteilhaft auch Gewicht eingespart werden, da bei bereits gefüllten Behältern das Medium ablaufen kann.

In einer Ausführungsform weisen die mehreren Behälterbehandlungsvorrichtungen eine Behälterverschließvorrichtung zum Verschließen der Behälter mit Behälterverschlüssen auf. Die Behälterverschließvorrichtung weist eine Verschlussausleiteinrichtung zum Ausleiten von fehlerhaften oder unbenutzten Behälterverschlüssen auf. Die Verschlussausleiteinrichtung ist mit dem Sammelausleitförderer zum Ausleiten der fehlerhaften oder unbenutzten Behälterverschlüsse zu dem Sammelausleitförderer verbunden, vorzugsweise über eine (z. B. Rutsche) der mehreren Behälterausleiteinrichtungen. Vorteilhaft kann der Sammelausleitförderer auf diese Weise auch zum Ausleiten von ausgeleiteten Behälterverschlüssen genutzt werden.

In einer weiteren Ausführungsform weist mindestens eine der mehreren Behälterausleiteinrichtungen einen (z. B. Kipp-) Ausleitförderer mit einem umlaufenden Förderelement (z. B. Förderband, Mattenkette) zum unterseitigen Abstützen der ausgeleiteten Behälter auf. Vorzugsweise kann der Ausleitförderer (z. B. manuell oder motorisch) schwenkbar sein, z. B. um eine Horizontalachse zum Hochschwenken des Ausleitförderers in eine Nichtbetriebsposition zum Ermöglichen eines Passierens des Ausleitförderers bei einem Begehen der Behälterbehandlungsanlage. Vorteilhaft kann damit eine verbesserte Zugänglichkeit zu den Maschinen der Anlage ermöglicht werden.

In einer Ausführungsvariante weist mindestens eine der Behälterausleiteinrichtungen eine schwenkbare Klappe auf, mit der die ausgeleiteten Behälter wahlweise zu dem Sammelausleitförderer oder einer Sammelkiste, bevorzugt unterhalb von der schwenkbaren Klappe, führbar sind. Vorzugsweise kann ferner mindestens eines erfüllt sein von:
- die schwenkbare Klappe ist zum Schwenken (z. B. elektro-) motorisch angetrieben,
- die schwenkbare Klappe ist (z. B. um eine horizontale Schwenkachse) in eine Schwenkstellung schwenkbar, in der sie das umlaufende Förderelement des Sammelausleitförderers abdeckt und einen Behälterpfad zu der Sammelkiste freigibt;
- die schwenkbare Klappe ist (z. B. um eine horizontale Schwenkachse) in eine (z. B. weitere) Schwenkstellung schwenkbar, in der sie das umlaufende Förderelement des Sammelausleitförderers freigibt und einen Behälterpfad zu der Sammelkiste blockiert; und
- die die schwenkbare Klappe aufweisende Behälterausleiteinrichtung ist einer Behälterherstellvorrichtung der mehreren Behälterbehandlungsvorrichtungen zugeordnet.

Vorteilhaft kann somit beispielsweise für eine Inspektion oder Qualitätskontrolle eine Entnahme von ausgeleiteten Behältern aus der Sammelkiste ermöglicht werden, wenn dies gewünscht ist, wobei eine direkte Zuordnung zur jeweiligen Behälterausleiteinrichtung und somit zur jeweiligen Ausleitstelle ermöglicht wird.

In einer weiteren Ausführungsvariante weisen die mehreren Behälterausleiteinrichtungen mindestens eine Rückstauausleiteinrichtung (z. B. mit einer Rutsche) auf, die zum Ausleiten von sich im Behältertransportsystem aufgestauten Behältern zu dem Sammelausleitförderer ausgebildet ist. Vorzugsweise kann ferner mindestens eines erfüllt sein von:
- die Rückstauausleiteinrichtung ist seitlich neben dem Behältertransportsystem und dem Sammelausleitförderer angeordnet;
- die Rückstauausleiteinrichtung öffnet sich trichterförmig hin zu dem Behältertransportsystem; und
- im Bereich der Rückstauausleiteinrichtung ist das Behältertransportsystem (z. B. direkt) oberhalb von dem Sammelausleitförderer angeordnet.

Vorteilhaft kann somit auf vergleichsweise einfache Weise verhindert werden, dass sich ein Behälterrückstau aus nicht ausgeleiteten Behältern bis hin zu beispielsweise Transportsternen oder Behälterbehandlungsvorrichtungen aufbaut, sodass beispielsweise Kollisionen verhindert werden können.

In einem Ausführungsbeispiel weist mindestens eine der mehreren Behälterausleiteinrichtungen eine, vorzugsweise pneumatische oder elektromotorische, Ablenkungseinrichtung (z. B. Servomotor-Ablenkungseinrichtung) auf, die dazu ausgebildet ist, von der jeweiligen Behälterausleiteinrichtung transportierte Behälter zum Ablenken von der jeweiligen Behälterausleiteinrichtung zu beaufschlagen, vorzugsweise zum Hinunterfallen von der jeweiligen Behälterausleiteinrichtung (z. B. auf den Boden oder in eine Kiste neben der Behälterausleiteinrichtung). Ferner können vorzugsweise eine Sensoreinrichtung zum Erfassen eines Behälterrückstaus auf der jeweiligen Behälterausleiteinrichtung und optional eine Steuereinrichtung, die dazu konfiguriert ist, die Ablenkungseinrichtung abhängig von einer Signalausgabe der Sensoreinrichtung zu betreiben, umfasst sein. Vorzugsweise ist die Ablenkungseinrichtung benachbart zu einem Behälterfreifallbereich der jeweiligen Behälterausleiteinrichtung zum Beaufschlagen der Behälter im freien Fall angeordnet. Bevorzugt kann sich der Behälterfreifallbereich an einen Auslass einer Rutsche der jeweiligen Behälterausleiteinrichtung anschließen. Vorteilhaft kann somit auf vergleichsweise einfache Weise verhindert werden, dass sich ein Behälterrückstau aus ausgeleiteten Behältern bis hin zu beispielsweise Transportsternen oder Behälterbehandlungsvorrichtungen aufbaut, sodass beispielsweise Kollisionen verhindert werden können.

Vorzugsweise kann sich der Begriff "Steuereinrichtung" auf eine Elektronik (z. B. ausgeführt als eine Treiberschaltung oder mit Mikroprozessor(en) und Datenspeicher) und/oder eine mechanische, pneumatische und/oder hydraulische Steuerung beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein. Die Steuereinrichtung kann beispielsweise eine Zentralsteuereinrichtung sein oder mehrere dezentral bzw. verteilt angeordnete Steuereinrichtungen aufweisen.

In einem weiteren Ausführungsbeispiel weist die Behälterbehandlungsanlage ferner eine (z. B. Teil- oder Voll-) Einhausung auf, in der mindestens eine der mehreren Behälterbehandlungsvorrichtungen, vorzugsweise eine Behälterherstellvorrichtung und/oder mindestens eine Behälterfüllvorrichtung und/oder mindestens eine Behälterverschließvorrichtung, angeordnet ist. Vorzugsweise kann die Einhausung einen Durchlass (zum Passieren der Einhausung) aufweisen. Bevorzugt passieren ein (z. B. Linear- oder Rundläufer-) Behälterförderer des Behältertransportsystems und der Sammelausleitförderer den (denselben) Durchlass (gemeinsam). Vorteilhaft kann damit ein ohnehin für den Behälterförderer vorhandener Durchlass der Einhausung von dem Sammelausleitförderer genutzt werden, sodass sich eine Konstruktion der Einhausung durch die Anordnung des Sammelausleitförderers nicht verkompliziert und bspw. kaum modifiziert werden muss, wenn überhaupt.

In einer Ausführungsform ist ferner mindestens eines erfüllt von:
- der Sammelausleitförderer verläuft im Bereich des Durchlasses parallel zu dem Behälterförderer, vorzugsweise parallel neben, parallel über oder parallel unter dem Behälterförderer;
- der Sammelausleitförderer und der Behälterförderer teilen sich ein gemeinsames Traggestell; und
- der Behälterförderer ist oberhalb von dem Sammelausleitförderer angeordnet und eine der mehreren Behälterausleiteinrichtungen ist eine Rückstauausleiteinrichtung (z. B. mit einer Rutsche), die mit dem Sammelausleitförderer zum Ausleiten von sich auf dem Behälterförderer rückstauenden Behältern zu dem Sammelausleitförderer verbunden ist.

Vorteilhaft kann damit der Aufbau und die Anordnung des Sammelausleitförderers weiter vereinfacht und verbessert werden.

In einer weiteren Ausführungsform weisen die mehreren Behälterbehandlungsvorrichtungen eine (z. B. Rundläufer-) Behälterherstellvorrichtung, vorzugsweise eine Behälterblasvorrichtung, auf, die bspw. in der Einhausung angeordnet ist. Das Behältertransportsystem weist vorzugsweise ferner auf:
- einen Einlaufförderer, vorzugsweise Einlauftransportstern, wobei der Einlaufförderer in der Einhausung angeordnet ist, eine der mehreren Ausleitstellen aufweist und mit der Behälterherstellvorrichtung zum Fördern von Vorformling-Behältern zu der Behälterherstellvorrichtung verbunden ist; und/oder
- einen Auslaufförderer, vorzugsweise Auslauftransportstern, wobei der Auslaufförderer in der Einhausung angeordnet ist, eine weitere der mehreren Ausleitstellen aufweist und mit der Behälterherstellvorrichtung zum Abtransportieren von Behältern von der Behälterherstellvorrichtung verbunden ist.

Vorzugsweise kann der den Durchlass passierende Behälterförderer ein Vorformling-Behälterförderer sein, der behälterstromaufwärts von dem Einlaufförderer angeordnet ist.

In einer Ausführungsvariante weist die Behälterbehandlungsanlage ferner einen weiteren (z. B. Linear-) Sammelausleitförderer mit einem umlaufenden Förderelement (z. B. Förderband, Mattenkette usw.) zum unterseitigen Abstützen von ausgeleiteten Behältern auf. Die Behälterbehandlungsanlage kann ferner mehrere weitere Behälterausleiteinrichtungen, die den weiteren Sammelausleitförderer mit mehreren weiteren Ausleitstellen des Behältertransportsystems zum Empfangen von aus der jeweiligen weiteren Ausleitstelle des Behältertransportsystems ausgeleiteten Behältern verbindet, aufweisen. Vorzugsweise kann ferner mindestens eines erfüllt sein von:
- die mehreren weiteren Behälterausleiteinrichtungen sind voneinander beabstandet mit dem weiteren Sammelausleitförderer verbunden;
- die mehreren weiteren Ausleitstellen sind voneinander beabstandet;
- die mehreren weiteren Behälterausleiteinrichtungen weisen teilweise oder jeweils ein betätigbares Ausleitelement, vorzugsweise Pusher, Stößel oder Schieber, zum Ausleiten von (z. B. fehlerhaften) Behältern aus dem Behältertransportsystem auf; und
- die mehreren weiteren Behälterausleiteinrichtungen weisen teilweise oder jeweils eine Rutsche zum Hinunterrutschen für die ausgeleiteten Behälter auf, vorzugsweise zum Rutschen auf das umlaufende Förderelement des weiteren Sammelausleitförderers.

Vorteilhaft können auf diese Weise bspw. Anlagen mit großer Leistung, zum Beispiel mit zwei Behälterfüllvorrichtungen und zwei Behälterverschließvorrichtungen, die hierin vorgeschlagenen Techniken bezüglich der Sammelausleitung nutzen, nämlich mit zwei separaten Sammelausleitpfaden, realisiert durch die zwei Sammelausleitförderer.

In einer weiteren Ausführungsvariante weist die Einhausung einen weiteren Durchlass auf, und ein weiterer Behälterförderer des Behältertransportsystems und der weitere Sammelausleitförderer passieren den weiteren Durchlass (gemeinsam). Vorzugsweise kann ferner mindestens eines erfüllt sein von:
- der weitere Sammelausleitförderer verläuft im Bereich des weiteren Durchlasses parallel zu dem weiteren Behälterförderer, bevorzugt parallel neben, parallel über oder parallel unter dem weiteren Behälterförderer;
- der weitere Sammelausleitförderer und der weitere Behälterförderer teilen sich ein gemeinsames Traggestell;
- der weitere Behälterförderer ist oberhalb von dem weiteren Sammelausleitförderer angeordnet und eine der mehreren weiteren Behälterausleiteinrichtungen ist eine Rückstauausleiteinrichtung (z. B. mit einer Rutsche), die mit dem weiteren Sammelausleitförderer zum Ausleiten von sich auf dem weiteren Behälterförderer rückstauenden Behältern zu dem weiteren Sammelausleitförderer verbunden ist.

In einem Ausführungsbeispiel weisen die mehreren Behälterbehandlungsvorrichtungen eine erste (z. B. Rundläufer-) Behälterfüllvorrichtung, eine zweite (z. B. Rundläufer-) Behälterfüllvorrichtung, eine erste (z. B. Rundläufer-) Behälterverschließvorrichtung und eine zweite (z. B. Rundläufer-) Behälterverschließvorrichtung auf, die bevorzugt in der Einhausung angeordnet sind.

In einem weiteren Ausführungsbeispiel ist ferner mindestens eines erfüllt von:
- das Behältertransportsystem weist einen Verteilförderer, vorzugsweise Verteiltransportstern, auf, der bspw. in der Einhausung zum Aufteilen von Behältern auf die erste Behälterfüllvorrichtung und die zweite Behälterfüllvorrichtung angeordnet ist und/oder eine der mehreren Ausleitstellen aufweist;
- das Behältertransportsystem weist einen ersten Verbindungsförderer, vorzugsweise Verbindungstransportstern, auf, der bspw. in der Einhausung angeordnet ist und die erste Behälterfüllvorrichtung und die erste Behälterverschließvorrichtung verbindet und/oder eine der mehreren Ausleitstellen aufweist;
- das Behältertransportsystem weist einen zweiten Verbindungsförderer, vorzugsweise Verbindungstransportstern, auf, der bspw. in der Einhausung angeordnet ist und die zweite Behälterfüllvorrichtung und die zweite Behälterverschließvorrichtung verbindet und/oder eine der mehreren weiteren Ausleitstellen aufweist;
- das Behältertransportsystem weist einen ersten Ausgabeförderer, vorzugsweise Linearausgabeförderer, auf, der bspw.in der Einhausung angeordnet ist, mit der ersten Behälterverschließvorrichtung zum Empfangen von verschlossen Behältern verbunden ist und/oder eine der mehreren Ausleitstellen aufweist (, wobei vorzugsweise der erste Ausgabeförderer der den Durchlass passierende Behälterförderer ist);
- das Behältertransportsystem weist einen zweiten Ausgabeförderer, vorzugsweise Linearausgabeförderer, auf, der bspw. in der Einhausung angeordnet ist, mit der zweiten Behälterverschließvorrichtung zum Empfangen von verschlossen Behältern verbunden ist und/oder eine der mehreren weiteren Ausleitstellen aufweist (, wobei vorzugsweise der zweite Ausgabeförderer der den weiteren Durchlass passierende weitere Behälterförderer ist);
- die erste Behälterverschließvorrichtung weist eine Verschlussausleiteinrichtung zum Ausleiten von fehlerhaften oder unbenutzten Behälterverschlüssen auf, die bspw. mit dem Sammelausleitförderer zum Ausleiten der fehlerhaften oder unbenutzten Behälterverschlüsse zu dem Sammelausleitförderer verbunden ist (z. B. über eine Rutsche einer der Behälterausleiteinrichtungen); und
- die zweite Behälterverschließvorrichtung weist eine Verschlussausleiteinrichtung zum Ausleiten von fehlerhaften oder unbenutzten Behälterverschlüssen auf, die bspw. mit dem weiteren Sammelausleitförderer zum Ausleiten der fehlerhaften oder unbenutzten Behälterverschlüsse zu dem weiteren Sammelausleitförderer verbunden ist (z. B. über eine Rutsche einer der weiteren Behälterausleiteinrichtungen).

Beispielsweise können die Behälter als Flaschen, Dosen, Kanister, Kartons, Flakons, Tuben usw. ausgeführt sein.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Draufsicht auf eine Behälterbehandlungsanlage gemäß einem Ausführungsbeispiel;
- Figur 2: eine schematische Draufsicht auf eine Behälterbehandlungsanlage gemäß einem weiteren Ausführungsbeispiel;
- Figur 3: eine schematische Draufsicht auf eine Behälterbehandlungsanlage gemäß einem weiteren anderen Ausführungsbeispiel;
- Figur 4: eine perspektivische Detailansicht eines Abschnitts der Behälterbehandlungsanlage von Figur 3; und
- Figur 5: eine schematische Darstellung einer beispielhaften Behälterausleiteinrichtung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

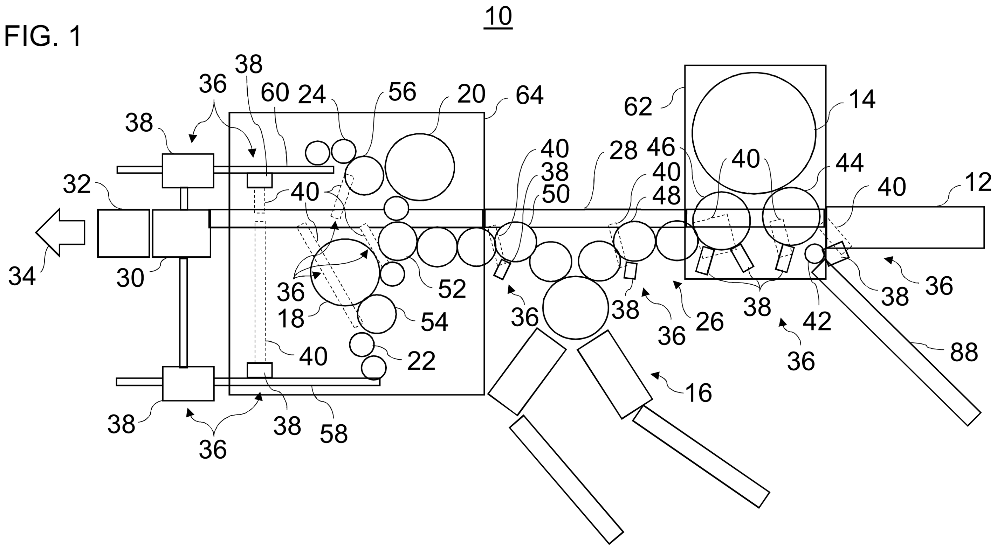

Die Figur 1 zeigt eine Behälterbehandlungsanlage 10.

Die Behälterbehandlungsanlage 10 weist mehrere Behälterbehandlungsvorrichtungen 12 - 24, ein Behältertransportsystem 26, einen Sammelausleitförderer 28 und mehrere Behälterausleiteinrichtungen 36 auf. Optional kann die Behälterbehandlungsanlage 10 beispielsweise noch eine Zerkleinerungseinrichtung 30 und/oder ein Sammelauffangbehältnis 32 und/oder mindestens eine Einhausung 62, 64 aufweisen.

Die Behälterbehandlungsvorrichtungen 12 - 24 können jeweils bspw. als Rundläufer-Behälterbehandlungsvorrichtung oder als Linear-Behälterbehandlungsvorrichtung ausgeführt sein.

Beispielsweise kann die Behälterbehandlungsanlage 10 als Behälterbehandlungsvorrichtungen mindestens eines aufweisen von: eine Heizvorrichtung 12, eine Behälterherstellvorrichtung 14, eine Behälteretikettiervorrichtung 16, eine Behälterfüllvorrichtung 18, eine Behälterfüllvorrichtung 20, eine Behälterverschließvorrichtung 22 und eine Behälterverschließvorrichtung 24.

Die Heizvorrichtung 12 kann Vorformlinge (Behälterrohling bzw. Preforms) auf eine gewünschte Temperatur erhitzen. Beispielsweise kann das Behältertransportsystem 26 Vorformlinge zu der Heizvorrichtung 12 transportieren und erwärmte Vorformlinge von der Heizvorrichtung 12 abtransportieren.

Die Behälterherstellvorrichtung 14 kann aus Vorformlingen Behälter herstellen. Beispielsweise kann das Behältertransportsystem 26 Vorformlinge (Vorformling-Behälter) zu der Behälterherstellvorrichtung 14 transportieren und Behälter von der Behälterherstellvorrichtung 14 abtransportieren.

Vorzugsweise kann die Behälterherstellvorrichtung als eine Behälterblasvorrichtung, vorzugsweise Streckblasvorrichtung, zum Blasen der Behälter aus den Vorformlingen ausgeführt sein. Bevorzugt ist die Behälterherstellvorrichtung als Behälterherstell-Karussell ausgeführt. Die Behälterherstellvorrichtung kann mehrere Herstellstationen, z. B. Blasstationen, zum gleichzeitigen oder zeitliche überlappenden Herstellen mehrerer Behälter aufweisen. Bspw. können die Herstellstationen um einen Umfang der als Behälterherstell-Karussell ausgeführten Behälterherstellvorrichtung angeordnet sein. Die Behälterherstellvorrichtung kann bezüglich eines Behälterstroms stromabwärts von der Heizvorrichtung 12 angeordnet sein.

Die Behälteretikettiervorrichtung 16 kann die Behälter etikettieren, z. B. mit Selbstklebeetiketten, Kaltleimetiketten oder Rollenetiketten. Beispielsweise kann das Behältertransportsystem 26 Behälter zu der Behälteretikettiervorrichtung 16 transportieren und etikettierte Behälter von der Behälteretikettiervorrichtung 16 abtransportieren.

Die Behälteretikettiervorrichtung 16 kann vorzugsweise als eine Rundläufer-Etikettiervorrichtung ausgeführt sein. Die Behälteretikettiervorrichtung 16 kann bspw. mehrere drehbare Behälteraufnahmen (z. B. Behälterdrehteller) für die Behälter, die um einen Umfang eines Karussells der Rundläufer-Etikettiervorrichtung angeordnet sind, aufweisen. Die Behälteraufnahmen mit den darin oder daran aufgenommenen Behältern können an mindestens einem Etikettieraggregat der Behälteretikettiervorrichtung 16 vorbeibewegt werden. Beispielsweise können zwei Etikettieraggregate umfasst sein, wie in Figur 1 schematisch dargestellt ist. Das mindestens eine Etikettieraggregat kann bspw. an einer Peripherie der Rundläufer-Etikettiervorrichtung angeordnet sein. Die Behälteretikettiervorrichtung 16 kann bezüglich eines Behälterstroms bspw. stromabwärts von der Behälterherstellvorrichtung 14 angeordnet sein.

Die Behälterfüllvorrichtungen 18, 20 können die Behälter füllen, vorzugsweise mit einem flüssigen oder pastösen Medium (z. B. Getränk). Es ist möglich, dass nur eine Behälterfüllvorrichtung 18 oder 20 umfasst ist. Die Behälterfüllvorrichtungen 18, 20 sind vorzugsweise als Rundläufer-Füllvorrichtung ausgeführt. Beispielsweise kann das Behältertransportsystem 26 Behälter zu der Behälterfüllvorrichtung 18 und/oder 20 transportieren und gefüllte Behälter von der Behälterfüllvorrichtung 18 und/oder 20 abtransportieren.

Die Behälterfüllvorrichtungen 18, 20 können bspw. mehrere Füllstationen zum gleichzeitigen oder zeitlich überlappenden Befüllen mehrerer Behälter aufweisen. Bspw. können die Füllstationen verteilt um einen Umfang eines Füllerkarussells der jeweiligen Rundläufer-Füllvorrichtung herum angeordnet sein. Die Behälterfüllvorrichtungen 18, 20 können bezüglich eines Behälterstroms bspw. stromabwärts von der Behälteretikettiervorrichtung 16 angeordnet sein.

Die Behälterverschließvorrichtungen 22, 24 können die Behälter verschließen, z. B. mit einem Deckel, einem Korken, einem Kronkorken oder einem Schraubverschluss. Es ist möglich, dass nur eine Behälterverschließvorrichtung 22 oder 24 umfasst ist. Beispielsweise kann das Behältertransportsystem 26 Behälter zu der Behälterverschließvorrichtung 22 und/oder 24 transportieren und verschlossene Behälter von der Behälterverschließvorrichtung 22 und/oder 24 abtransportieren.

Die Behälterverschließvorrichtungen 22, 24 können vorzugsweise als Rundläufer-Verschließvorrichtungen ausgeführt sein. Die Behälterverschließvorrichtungen 22, 24 können mehrere Verschließstationen zum gleichzeitigen oder zeitlich überlappenden Verschließen mehrerer Behälter aufweisen. Bspw. können die Verschließstationen verteilt um einen Umfang eines Verschließerkarussells der jeweiligen Rundläufer-Verschließvorrichtung herum angeordnet sein. Die Behälterverschließvorrichtungen 22, 24 können bezüglich eines Behälterstroms bspw. stromabwärts von den Behälterfüllvorrichtungen 18, 20 angeordnet sein.

Das Behältertransportsystem 26 verbindet die Behälterbehandlungsvorrichtungen 12, 14, 16, 18, 20, 22 und/oder 24 (soweit vorhanden) zum Transportieren der Behälter miteinander. Das Behältertransportsystem 26 kann die Behälter durch die Behälterbehandlungsanlage 10 transportieren, z. B. auf einem oder mehreren Pfaden. Das Behältertransportsystem 26 kann bspw. mindestens einen Transportstern und/oder mindestens einen Linearförderer aufweisen.

Der Sammelausleitförderer 28 dient zum Transportieren von Behältern, die aus dem Behältertransportsystem 26 mittels der mehreren Behälterausleiteinrichtungen 36 ausgeleitet wurden.

Der Sammelausleitförderer 28 weist ein umlaufendes Förderelement auf. Das umlaufende Förderelement kann ausgeleitete Behälter beim Transportieren unterseitig abstützen. Die Behälter können während des Transportierens in zufälliger Anordnung auf dem umlaufenden Förderelement liegen. Das Förderelement kann bspw. ein Förderband, ein Riemen, ein Gurt oder eine Mattenkette sein.

Bevorzugt ist der Sammelausleitförderer 28 ein Linearförderer. Es ist möglich, dass mehr als ein Sammelausleitförderer 28 umfasst ist.

Allgemein kann der Sammelausleitförderer 28 durch unterschiedliche Grundprinzipien der Fördertechnik realisiert werden. Das Sammelausleitförderer 28 kann in mehrere Abschnitte unterteilt sein, wobei die ausgeleiteten Behälter von einem auf das nächste Förderteilsystem übergeben werden können. Neben dem genannten Stetigförderer mittels des umlaufenden Förderelements können zusätzlich bspw. Schnecken sowie weitere denkbare Systeme zum Einsatz kommen.

Beispielsweise kann der Sammelausleitförderer 28 mit einer Zerkleinerungseinrichtung 30 und/oder mit einem Sammelauffangbehältnis 32 verbunden sein.

Die Zerkleinerungseinrichtung 30 kann ausgeleitete Behälter von dem Sammelausleitförderer 28 empfangen. Die Zerkleinerungseinrichtung 30 kann die empfangenen Behälter zerkleinern, zum Beispiel schreddern oder zermahlen. Bevorzugt kann die Zerkleinerungseinrichtung 30 mit dem Sammelauffangbehältnis 32 verbunden sein. Beispielsweise können die zerkleinerten Behälter von der Zerkleinerungseinrichtung 30 zu dem Sammelauffangbehältnis 32 zugeführt werden.

Das Sammelauffangbehältnis 32 kann ausgeleitete Behälter von dem Sammelausleitförderer 28 und/oder zerkleinerte Behälter von der Zerkleinerungseinrichtung 30 empfangen und aufnehmen. Bevorzugt weist das Sammelauffangbehältnis 32 ein Aufnahmevolumen für die ausgeleiteten Behälter von ≥ 1 m^3, ≥ 1.5 m^3 oder ≥ 2 m^3 auf.

Es ist möglich, dass das Sammelauffangbehältnis 32 mit einer Presse zum Verdichten der aufgenommenen Behälter verbunden ist. Beispielsweise kann die Presse die ausgeleiteten Behälter direkt innerhalb des Sammelauffangbehältnisses 32 verdichten.

Vorzugsweise kann benachbart zu dem Sammelauffangbehältnis 32 ein Hochförderer in den Sammelausleitförderer 28 integriert sein, zum Abwerfen der ausgeleiteten Behälter in das Sammelauffangbehältnis 32.

Bevorzugt kann das Sammelauffangbehältnis 32 austauschbar angeordnet sein. Beispielsweise kann ein mit ausgeleiteten Behältern gefülltes Sammelauffangbehältnis 32 durch ein leeres Sammelauffangbehältnis 32 ausgetauscht werden.

Bevorzugt kann das Sammelauffangbehältnis 32 abtransportiert werden, wenn es gefüllt ist. Beispielsweise kann das Sammelauffangbehältnis 32 mittels eines fahrerlosen Transportfahrzeugs (AGV - engl. automated guided vehice) 34 abtransportiert werden.

Die Behälterausleiteinrichtungen 36 verbindet mehrere Ausleitstellen des Behältertransportsystems 26 mit dem Sammelausleitförderer 28. Der Sammelausleitförderer 28 empfängt die an den Ausleitstellen des Behältertransportsystems 26 ausgeleiteten Behälter über die Behälterausleiteinrichtungen 36. Die Ausleitstellen können voneinander beabstandet entlang eines Verlaufs des Behältertransportsystems 26 angeordnet sein. Bevorzugt sind die Behälterausleiteinrichtungen 36 beabstandet voneinander mit dem Sammelausleitförderer 28 verbunden.

Die Behälterausleiteinrichtungen 36 können vorzugsweise jeweils ein Ausleitelement 38 und/oder eine Rutsche 40 aufweisen. Es ist möglich, dass sich bspw. mehrere Behälterausleiteinrichtungen 36 eine Rutsche 40 teilen. Es ist auch möglich, dass eine Behälterausleiteinrichtung 36 bspw. einen eigenen Förderer, z. B. mit umlaufenden Förderelement, zum Transportieren von ausgeleiteten Behältern von der jeweiligen Ausleitstelle zu dem Sammelausleitförderer 28 aufweist (nicht in Figur 1 dargestellt).

Die Ausleitelemente 38 können jeweils einer Ausleitstelle des Behältertransportsystems 26 zugeordnet sein. Ein Ausleitelement 38 kann dazu ausgebildet sein, Behälter an der jeweiligen Ausleitstelle des Behältertransportsystems 26 aus dem Behälterstrom auszuleiten.

Die Ausleitelemente 38 können bspw. aktiv oder passiv sein.

Ein aktives Ausleitelement 38 kann Behälter an der jeweiligen Ausleitstelle des Behältertransportsystems 26 aktiv ausleiten. Beispielsweise kann ein aktives Ausleitelement 38 zum Ausleiten eines Behälters an der jeweiligen Ausleitstelle des Behältertransportsystems 26 betätigbar sein, z. B. motorisch, mechanisch oder fluidisch (z. B. pneumatisch). Beispielsweise kann ein aktives Ausleitelement 38 als ein Stößel (Pusher) oder ein Schieber ausgeführt sein.

Beispielsweise kann eine, vorzugsweise sensorische, Inspektionseinheit der jeweiligen Behälterausleiteinrichtung 36 die Behälter erfassen. Abhängig von einer Signalausgabe der Inspektionseinheit kann das aktive Ausleitelement 38 zum Ausleiten eines Behälters, der beispielsweise sensorisch als fehlerhaft erfasst wurde, betätigt werden.

Ein passives Ausleitelement 38 kann Behälter an der jeweiligen Ausleitstelle des Behältertransportsystems 26 passiv ausleiten. Beispielsweise kann ein passives Ausleitelement 38 so konstruiert sein, dass es Behälter bei einem Behälterrückstau bis hin zu der jeweiligen Ausleitstelle aufnimmt und die aufgenommenen Behälter ausleitet. Beispielsweise kann ein passives Ausleitelement 38 als ein (Rückstau-) Behälterüberlauf ausgeführt sein.

Von einer Behälterausleiteinrichtung 36 ausgeleitete Behälter können eine Rutsche 40 der Behälterausleiteinrichtung 36 hinunterrutschen. Bevorzugt können die ausgeleiteten Behälter direkt auf das umlaufende Förderelement des Sammelausleitförderers 28 rutschen. Es ist jedoch auch möglich, dass die ausgeleiteten Behälter beispielsweise auf einen Förderer der Behälterausleiteinrichtung 36 rutschen, der die ausgeleiteten Behälter wiederum zu dem umlaufenden Förderelement des Sammelausleitförderers 28 fördern kann.

Die Figur 1 zeigt beispielhaft eine Vielzahl von Behälterausleiteinrichtungen 36, die unterschiedliche Ausleitstellen des Behältertransportsystems 26 mit dem Sammelausleitförderer 28 verbinden.

Beispielsweise kann eine Behälterausleiteinrichtung 36 an einer Ausleitstelle eines Einlaufförderers 42 des Behältertransportsystems 26 angeordnet sein. Der Einlaufförderer 42 kann zum Transportieren von Vorformlingen zu der Heizvorrichtung 14 angeordnet sein. Der Einlaufförderer 42 kann bspw. als ein Transportstern, besonders bevorzugt ein Sägezahnstern, ausgeführt sein.

Als weiteres Beispiel kann eine Behälterausleiteinrichtung 36 an einer Ausleitstelle eines Einlaufförderers 44 des Behältertransportsystems 26 angeordnet sein. Der Einlaufförderer 44 kann zum Transportieren von erwärmten Vorformlingen zu der Behälterherstellvorrichtung 14 angeordnet sein. Der Einlaufförderer 44 kann bspw. als ein Transportstern, vorzugsweise Einlaufstern, ausgeführt sein.

Als weiteres anderes Beispiel kann eine Behälterausleiteinrichtung 36 an einer Ausleitstelle eines Auslaufförderers 46 des Behältertransportsystems 26 angeordnet sein. Der Auslaufförderer 46 kann zum Abtransportieren von Behältern von der Behälterherstellvorrichtung 14 angeordnet sein. Der Auslaufförderer 46 kann bspw. als ein Transportstern, vorzugsweise Auslaufstern, ausgeführt sein.

Es ist möglich, dass eine Behälterausleiteinrichtung 36 an einer Ausleitstelle eines Verbindungsförderers 48 des Behältertransportsystems 26 angeordnet ist. Der Verbindungsförderer 48 kann bspw. Behälter hin zu der Behälteretikettiervorrichtung 16 transportieren. Beispielsweise kann der Verbindungsförderer 48 die transportierten Behälter an einen Einlaufstern der Behälteretikettiervorrichtung 16 übergeben. Der Verbindungsförderer 48 kann bspw. als ein Transportstern ausgeführt sein.

Auch möglich ist, dass eine Behälterausleiteinrichtung 36 an einer Ausleitstelle eines Verbindungsförderers 50 des Behältertransportsystems 26 angeordnet ist. Der Verbindungsförderer 48 kann bspw. Behälter von der Behälteretikettiervorrichtung 16 abtransportieren. Beispielsweise kann der Verbindungsförderer 50 die Behälter von einem Auslaufstern der Behälteretikettiervorrichtung 16 übernehmen. Der Verbindungsförderer 50 kann bspw. als ein Transportstern ausgeführt sein.

Ebenfalls möglich ist, dass eine Behälterausleiteinrichtung 36 an einer Ausleitstelle eines Verteilförderers 52 des Behältertransportsystems 26 angeordnet ist. Der Verteilförderer 52 kann bspw. empfangene Behälter auf die erste Behälterfüllvorrichtung 18 und auf die zweite Behälterfüllvorrichtung 20 aufteilen, bevorzugt im Verhältnis 50:50. Es ist möglich, dass das Verhältnis einstellbar ist. Beispielsweise kann der Verteilförderer 52 entkoppelbar mit einem Einlaufstern der ersten Behälterfüllvorrichtung 18 und entkoppelbar mit einem Einlaufstern der zweiten Behälterfüllvorrichtung 18 verbunden sein. Der Verteilförderer 52 kann bspw. als ein Verteiltransportstern ausgeführt sein.

Beispielsweise kann eine Behälterausleiteinrichtung 36 an einem Verbindungsförderer 54 des Behältertransportsystems 26 angeordnet sein. Der Verbindungsförderer 54 kann die erste Behälterfüllvorrichtung 18 und die erste Behälterverschließvorrichtung 22 verbinden. Der Verbindungsförderer 54 kann gefüllte Behälter von der ersten Behälterfüllvorrichtung 18 zu der ersten Behälterverschließvorrichtung 22 transportieren. Der Verbindungsförderer 54 kann beispielsweise als ein Transportstern ausgeführt sein.

Als weiteres Beispiel kann eine Behälterausleiteinrichtung 36 an einem Verbindungsförderer 56 des Behältertransportsystems 26 angeordnet sein. Der Verbindungsförderer 56 kann die zweite Behälterfüllvorrichtung 20 und die zweite Behälterverschließvorrichtung 24 verbinden. Der Verbindungsförderer 56 kann gefüllte Behälter von der zweiten Behälterfüllvorrichtung 20 zu der zweiten Behälterverschließvorrichtung 24 transportieren. Der Verbindungsförderer 56 kann beispielsweise als ein Transportstern ausgeführt sein.

Als anderes Beispiel kann mindestens eine Behälterausleiteinrichtung 36 an einem Ausgabeförderer 58 des Behältertransportsystems 26 angeordnet sein. Der Ausgabeförderer 58 kann behälterstromabwärts von der ersten Behälterverschließvorrichtung 22 angeordnet sein. Beispielsweise kann der Ausgabeförderer 58 Behälter von einem Auslaufstern der ersten Behälterverschließvorrichtung 22 übernehmen. Der Ausgabeförderer 58 kann beispielsweise ein, vorzugsweise einspuriger, Linearförderer sein. Beispielsweise kann der Ausgabeförderer 58 ein umlaufendes Förderelement, wie beispielsweise ein Förderband, ein Riemen, ein Gurt oder eine Mattenkette, zum bodenseitigen Abstützen der Behälter aufweisen.

Beispielsweise kann eine Behälterausleiteinrichtung 36 ein als Behälterüberlauf ausgeführtes Ausleitelement aufweisen, das Behälter bei einem Behälterrückstau auf dem Ausgabeförderer 58 ausleitet. Beispielsweise kann eine weitere Behälterausleiteinrichtung 36 eine Inspektionseinheit zum sensorischen Prüfen der von dem Ausgabeförderer 58 transportierten Behälter aufweisen. Von der Inspektionseinheit als fehlerhaft erkannte Behälter können von einem aktiven Ausleitelement 38 der weiteren Behälterausleiteinrichtungen 36 ausgeleitet werden.

Als weiteres anderes Beispiel kann eine Behälterausleiteinrichtung 36 an einem Ausgabeförderer 60 des Behältertransportsystems 26 angeordnet sein. Der Ausgabeförderer 60 kann behälterstromabwärts von der zweiten Behälterverschließvorrichtung 24 angeordnet sein. Beispielsweise kann der Ausgabeförderer 60 Behälter von einem Auslaufstern der zweiten Behälterverschließvorrichtung 24 übernehmen. Der Ausgabeförderer 60 kann beispielsweise ein, vorzugsweise einspuriger, Linearförderer sein. Beispielsweise kann der Ausgabeförderer 60 ein umlaufendes Förderelement, wie beispielsweise ein Förderband, ein Riemen, ein Gurt oder eine Mattenkette, zum bodenseitigen Abstützen der Behälter aufweisen.

Beispielsweise kann eine Behälterausleiteinrichtung 36 ein als Behälterüberlauf ausgeführtes Ausleitelement aufweisen, das Behälter bei einem Behälterrückstau auf dem Ausgabeförderer 60 ausleitet. Beispielsweise kann eine weitere Behälterausleiteinrichtung 36 eine Inspektionseinheit zum sensorischen Prüfen der von dem Ausgabeförderer 60 transportierten Behälter aufweisen. Von der Inspektionseinheit als fehlerhaft erkannte Behälter können von einem aktiven Ausleitelement 38 der weiteren Behälterausleiteinrichtungen 36 ausgeleitet werden.

Die mindestens eine Einhausung 62, 64 kann eine Teileinhausung oder eine Volleinhausung sein. In der mindestens einen Einhausung 62, 64 kann mindestens eine Behälterbehandlungsvorrichtung 14 - 24 angeordnet sein.

Beispielsweise kann in der Einhausung 62 die Behälterherstellvorrichtung 14 angeordnet sein. Zusätzlich kann in der Einhausung 62 bspw. der Einlaufförderer 42, der Einlaufförderer 44 und/oder der Auslaufförderer 46 angeordnet sein.

Beispielsweise kann in der Einhausung 64 die Behälterfüllvorrichtung 18, die Behälterfüllvorrichtung 20, die Behälterverschließvorrichtung 22 und/oder die Behälterverschließvorrichtung 24 angeordnet sein. Zusätzlich kann bspw. der Verteilförderer 52, der Verbindungsförderer 54, der Verbindungsförderer 56, ein Teil des Ausgabeförderers 58 und/oder ein Teil des Ausgabeförderers 60 angeordnet sein.

Bevorzugt ist, dass die Einhausung 62 und/oder 64 einen Durchlass aufweist. Den jeweiligen Durchlass können ein Behälterförderer des Behältertransportsystems 26 und der Sammelausleitförderer 28 bevorzugt gemeinsam passieren.

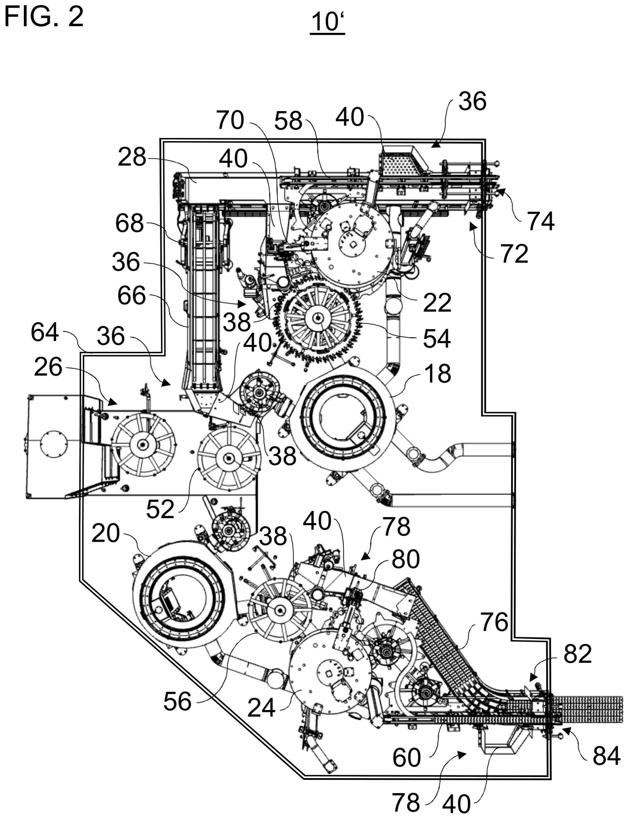

Die Figur 2 zeigt eine modifizierte Behälterbehandlungsanlage 10' mit einem Sammelausleitförderer 28 und optional einem weiteren Sammelausleitförderer 76.

Bevorzugt kann der Sammelausleitförderer 28 über eine Behälterausleiteinrichtung 36 mit einer Ausleitstelle des Verteilförderer 52 verbunden sein. Diese Behälterausleiteinrichtung 36 kann vorzugsweise eine Rutsche 40 aufweisen. Von der Rutsche 40 können die ausgeleiteten Behälter auf einen Ausleitförderer 66 rutschen.

Der Ausleitförderer 66 kann die Rutsche 40 mit dem Sammelausleitförderer 28 verbinden. Der Ausleitförderer 66 kann die ausgeleiteten Behälter von der Rutsche 40 zu dem Sammelausleitförderer 28 transportieren.

Bevorzugt kann der Ausleitförderer 66 ein Linearförderer sein. Beispielsweise kann der Ausleitförderer 66 ein umlaufendes Förderelement, z. B. Förderband oder Mattenkette, aufweisen. Das umlaufende Förderelement kann die ausgeleiteten Behälter beim Transport unterseitig abstützen.

Der Ausleitförderer 66 ist vorzugsweise schwenkbar. Bevorzugt kann der Ausleitförderer 66 um eine Horizontalachse 68 geschwenkt werden. Beim Schwenken kann bspw. ein Tragrahmen mit dem umlaufenden Förderelemente geschwenkt werden. Am Tragrahmen können bspw. ein Antriebsrad und ein Umlenkrad getragen sein, die von dem Förderelement umlaufen werden. Beispielsweise kann der Ausleitförderer 66 motorisch oder manuell schwenkbar sein.

Bevorzugt kann der Ausleitförderer 66 um die Horizontalachse 68 in eine Nichtbetriebsposition hochgeschwenkt werden. In der hochgeschwenkten Nichtbetriebsposition kann der Ausleitförderer 66 auf einfache Weise von Personal passiert werden. So kann bspw. beim Begehen der Anlage 10' ein Zugang zu dem Verbindungsförderer 54, der Behälterfüllvorrichtung 18 und der Behälterverschließvorrichtung 22 ermöglicht werden.

Andererseits kann der Ausleitförderer 66 um die Horizontalachse 68 in eine im Wesentlichen horizontale Betriebsposition runtergeschwenkt werden, wie in Figur 2 schematisch dargestellt ist.

Bevorzugt kann der Sammelausleitförderer 28 über eine Behälterausleiteinrichtung 36 mit einer Ausleitstelle des Verbindungsförderers 54 verbunden sein. Diese Behälterausleiteinrichtung 36 kann vorzugsweise eine Rutsche 40 aufweisen. Von der Rutsche 40 können die ausgeleiteten Behälter auf den Sammelausleitförderer 28 rutschen.

Die erste Behälterverschließvorrichtung 22 kann vorzugsweise eine Verschlussausleiteinrichtung 70 zum Ausleiten von Behälterverschlüssen aufweisen. Beispielsweise können mit der Verschlussausleiteinrichtung 70 fehlerhafte oder ungenutzte Behälterverschlüsse, z. B. Schraubverschlüsse, von der ersten Behälterverschließvorrichtung 22 ausgeleitet werden.

Die Verschlussausleiteinrichtung 70 kann mit dem Sammelausleitförderer 28 zum Ausleiten der Behälterverschlüsse zu dem Sammelausleitförderer 28 verbunden sein. Beispielsweise kann die Verschlussausleiteinrichtung 70 die Behälterverschlüsse auf die Rutsche 40 einer der Behälterausleiteinrichtungen 36 ausleiten. Über diese Rutsche 40 können die Behälterverschlüsse dann zu dem Sammelausleitförderer 28 rutschen.

Vorzugsweise kann der Ausgabeförderer 58 oberhalb von dem Sammelausleitförderer 28 angeordnet sein. Bevorzugt können sich der Sammelausleitförderer 28 und der Ausgabeförderer 58 ein gemeinsames Traggestell 72 teilen. Beispielsweise kann der Ausgabeförderer 58 direkt oberhalb von dem Sammelausleitförderer 28 angeordnet sein.

Der Ausgabeförderer 58 und der Sammelausleitförderer 28 können über eine Behälterausleiteinrichtung 36 miteinander verbunden sein. Bevorzugt ist diese Behälterausleiteinrichtung 36 eine Rückstauausleiteinrichtung. Über die Rückstauausleiteinrichtung können sich auf dem Ausgabeförderer 58 rückstauende Behälter nach unten hin zu dem Sammelausleitförderer 28 ausgeleitet werden. Im Einzelnen können sich auf dem Ausgabeförderer 58 rückstauende Behälter über eine seitlich neben dem Ausgabeförderer 58 angeordnete Rutsche 40 nach unten hin zu dem Sammelausleitförderer 28 rutschen. Die Rückstauausleiteinrichtung kann sich trichterförmig hin zu dem weiteren Ausgabeförderer 58 öffnen. Die Rückstauausleiteinrichtung kann seitlich neben dem Sammelausleitförderer 28 und dem Ausgabeförderer 58 angeordnet sein.

Bevorzugt können der Sammelausleitförderer 28 und der Ausgabeförderer 58 gemeinsam einen Durchlass 74 der Einhausung 64 passieren und die Einhausung 64 verlassen. Zumindest im Bereich des Durchlasses 74 können der Sammelausleitförderer 28 und der Ausgabeförderer 58 parallel verlaufen.

Der weitere Sammelausleitförderer 76 dient zum Transportieren von Behältern, die aus dem Behältertransportsystem 26 mittels mehrerer weiterer Behälterausleiteinrichtungen 78 ausgeleitet wurden.

Prinzipiell kann der weitere Sammelausleitförderer 76 wie der Sammelausleitförderer 28 ausgebildet sein.

Beispielsweise weist der weitere Sammelausleitförderer 76 ein umlaufendes Förderelement auf. Das umlaufende Förderelement kann ausgeleitete Behälter beim Transportieren unterseitig abstützen. Die Behälter können während des Transportierens in zufälliger Anordnung auf dem umlaufenden Förderelement liegen. Das Förderelement kann bspw. ein Förderband, ein Riemen, ein Gurt oder eine Mattenkette sein.

Bevorzugt ist der weitere Sammelausleitförderer 76 ein Linearförderer.

Beispielsweise kann der weitere Sammelausleitförderer 76 mit einer/der Zerkleinerungseinrichtung und/oder mit einem/dem Sammelauffangbehältnis verbunden sein (nicht in Figur 2 dargestellt).

Die weiteren Behälterausleiteinrichtungen 78 können prinzipiell ebenfalls wie die Behälterausleiteinrichtungen 36 ausgebildet sein.

Beispielsweise können die weiteren Behälterausleiteinrichtungen 78 mehrere weitere Ausleitstellen des Behältertransportsystems 26 mit dem weiteren Sammelausleitförderer 76 verbinden. Der weitere Sammelausleitförderer 76 kann die an den weiteren Ausleitstellen des Behältertransportsystems 26 ausgeleiteten Behälter über die weiteren Behälterausleiteinrichtungen 78 empfangen. Die weiteren Ausleitstellen können voneinander beabstandet entlang eines Verlaufs des Behältertransportsystems 26 angeordnet sein. Bevorzugt sind die weiteren Behälterausleiteinrichtungen 78 beabstandet voneinander mit dem weiteren Sammelausleitförderer 76 verbunden.

Bevorzugt kann der weitere Sammelausleitförderer 76 über eine weitere Behälterausleiteinrichtung 78 mit einer Ausleitstelle des Verbindungsförderers 56 verbunden sein. Diese weitere Behälterausleiteinrichtung 76 kann vorzugsweise eine Rutsche 40 aufweisen. Von der Rutsche 40 können die ausgeleiteten Behälter auf den weiteren Sammelausleitförderer 76 rutschen.

Die zweite Behälterverschließvorrichtung 24 kann vorzugsweise eine Verschlussausleiteinrichtung 80 zum Ausleiten von Behälterverschlüssen aufweisen. Beispielsweise können mit der Verschlussausleiteinrichtung 80 fehlerhafte oder ungenutzte Behälterverschlüsse, z. B. Schraubverschlüsse, von der zweiten Behälterverschließvorrichtung 24 ausgeleitet werden.

Die Verschlussausleiteinrichtung 80 kann mit dem weiteren Sammelausleitförderer 76 zum Ausleiten der Behälterverschlüsse zu dem Sammelausleitförderer 76 verbunden sein. Beispielsweise kann die Verschlussausleiteinrichtung 80 die Behälterverschlüsse auf die Rutsche 40 einer der weiteren Behälterausleiteinrichtungen 78 ausleiten. Über diese Rutsche 40 können die Behälterverschlüsse dann zu dem weiteren Sammelausleitförderer 76 rutschen.

Vorzugsweise kann der weitere Ausgabeförderer 60 oberhalb von dem weiteren Sammelausleitförderer 76 angeordnet sein. Bevorzugt können sich der weitere Sammelausleitförderer 76 und der weitere Ausgabeförderer 60 ein gemeinsames Traggestell 82 teilen. Beispielsweise kann der weitere Ausgabeförderer 60 direkt oberhalb von dem weiteren Sammelausleitförderer 76 angeordnet sein.

Der weitere Ausgabeförderer 60 und der weitere Sammelausleitförderer 76 können über eine weitere Behälterausleiteinrichtung 78 miteinander verbunden sein. Bevorzugt ist diese weitere Behälterausleiteinrichtung 78 eine Rückstauausleiteinrichtung. Über die Rückstauausleiteinrichtung können sich auf dem weiteren Ausgabeförderer 60 rückstauende Behälter nach unten hin zu dem weiteren Sammelausleitförderer 76 ausgeleitet werden. Im Einzelnen können sich auf dem weiteren Ausgabeförderer 60 rückstauende Behälter über eine seitlich neben dem weiteren Ausgabeförderer 60 angeordnete Rutsche 40 nach unten hin zu dem weiteren Sammelausleitförderer 76 rutschen. Die Rückstauausleiteinrichtung kann sich trichterförmig hin zu dem weiteren Ausgabeförderer 60 öffnen. Die Rückstauausleiteinrichtung kann seitlich neben dem weiteren Sammelausleitförderer 76 und dem weiteren Ausgabeförderer 60 angeordnet sein.

Bevorzugt können der weitere Sammelausleitförderer 76 und der weitere Ausgabeförderer 60 gemeinsam einen weiteren Durchlass 84 der Einhausung 64 passieren und die Einhausung 64 verlassen. Zumindest im Bereich des weiteren Durchlasses 84 können der weitere Sammelausleitförderer 76 und der weitere Ausgabeförderer 60 parallel verlaufen.

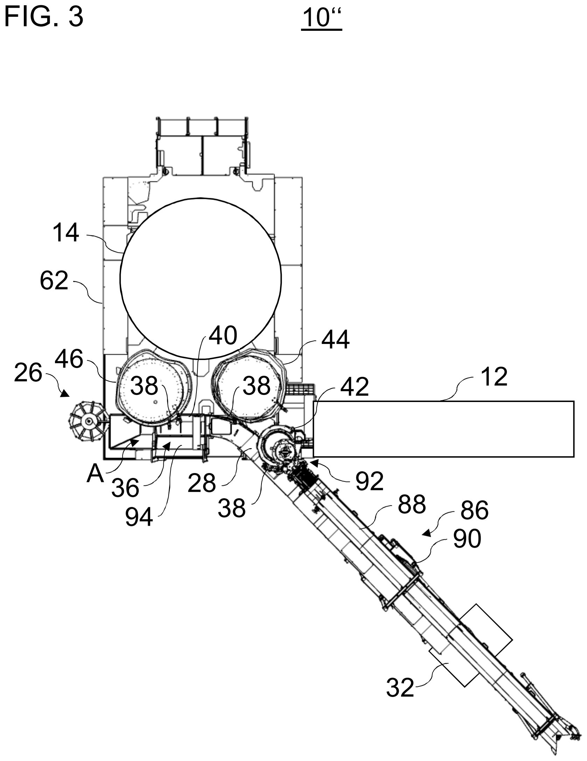

Die Figur 3 zeigt eine weitere modifizierte Behälterbehandlungsanlage 10".

Die Behälterbehandlungsanlage 10" kann einen Vorformling-Behälterförderer 86 mit einem Vorformling-Linearförderer 88 und dem (Vorformling-) Einlassförderer 42 aufweisen.

Der Vorformling-Behälterförderer 86 und der Sammelausleitförderer 28 können zumindest abschnittsweise seitlich nebeneinander verlaufen. Bevorzugt kann der Sammelausleitförderer 28 etwas tiefer verlaufen als der Vorformling-Behälterförderer 86. Bevorzugt können sich der Sammelausleitförderer 28 und der Vorformling-Behälterförderer 86 ein gemeinsames Traggestell 90 teilen.

Bevorzugt können der Vorformling-Behälterförderer 86 und der Sammelausleitförderer 28 gemeinsam einen Durchlass 92 der Einhausung 62 passieren und die Einhausung 62 verlassen. Zumindest im Bereich des Durchlasses 92 können der Vorformling-Behälterförderer 86 und der Sammelausleitförderer 28 bevorzugt parallel verlaufen.

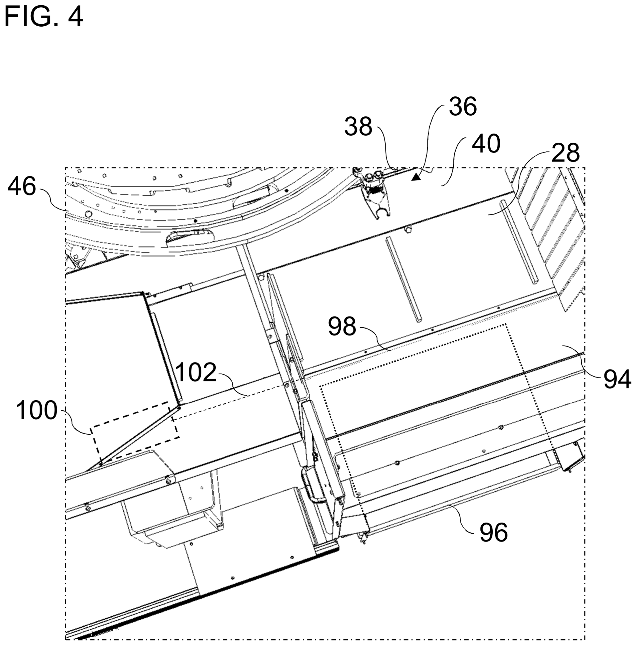

Die Figur 4 zeigt ein Detail A von Figur 3 in einer perspektivischen Ansicht.

Bevorzugt kann die Behälterausleiteinrichtung 36 eine schwenkbare Klappe 94 aufweisen. Die Behälterausleiteinrichtung 36 ist bevorzugt diejenige Behälterausleiteinrichtung, die eine Ausleitstelle des Auslaufförderers 46 mit dem Sammelausleitförderer 28 verbindet und/oder eine Ausleitstelle des Einlaufförderer 44 mit dem Sammelausleitförderer 28 verbindet.

Mittels der schwenkbaren Klappe 94 können mittels der Behälterausleiteinrichtung 36 ausgeleitete Behälter wahlweise zu dem Sammelausleitförderer 28 oder einer Sammelkiste 96 geführt werden. Bevorzugt kann die Sammelkiste 96 unterhalb von der Klappe 94 angeordnet sein.

Beispielsweise kann die Klappe 94 in eine erste Schwenkstellung schwenkbar sein, wie in Figur 4 dargestellt ist. In der ersten Schwenkstellung kann die Klappe 94 bspw. das umlaufende Förderelement des Sammelausleitförderers 28 freigeben. Somit können von der Behälterausleiteinrichtung 36 ausgeleitete Behälter auf dem umlaufenden Förderelement des Sammelausleitförderers 28 landen und abtransportiert werden. Bevorzugt kann die Klappe 94 in der ersten Schwenkstellung als eine Rutsche für Behälter zum Rutschen auf das umlaufende Förderelement des Sammelausleitförderers 28 dienen. Vorzugsweise kann die Klappe 94 einen Behälterpfad zu der Sammelkiste 96 blockiert.

Beispielsweise kann die Klappe 94 in eine zweite Schwenkstellung schwenkbar sein (nicht in Figur 4 dargestellt). Bevorzugt kann die Klappe 94 in der zweiten Schwenkstellung das umlaufende Förderelement des Sammelausleitförderers 28 abdecken. Vorzugsweise kann die Klappe 94 in der zweiten Schwenkstellung einen Behälterpfad zu der Sammelkiste 96 freigeben. Somit können von der Behälterausleiteinrichtung 36 ausgeleitete Behälter auf der Klappe 94 landen und von dieser zu der Sammelkiste 96 geleitet werden.

Die Klappe 94 kann bspw. um eine horizontale Schwenkachse 98 geschwenkt werden. Bevorzugt kann die Klappe 94 um die horizontale Schwenkachse 98 zwischen der ersten Schwenkstellung und der zweiten Schwenkstellung geschwenkt werden.

Vorzugsweise kann eine, vorzugsweise elektrische, Antriebseinheit 100 zum Schwenken der Klappe 94 trieblich mit der Klappe 94 verbunden sein. Die Antriebseinheit 100 kann bspw. ein Drehantrieb sein. Beispielsweise kann die Antriebseinheit 100 mittels einer (Schwenk-) Welle 102 antreibend mit der Klappe 94 verbunden sein.

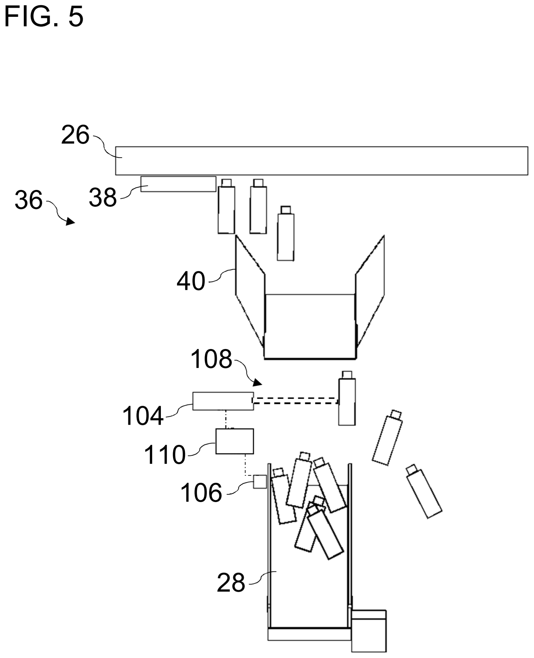

Die Figur 5 zeigt schematisch eine beispielhafte Behälterausleiteinrichtung 36.

Die Behälterausleiteinrichtung 36 kann die Rutsche 40, eine Ablenkungseinrichtung 104, eine Sensoreinrichtung 106 und eine Steuereinrichtung 110 aufweisen.

Von einem Ende der Rutsche 40 aus können die ausgeleiteten Behälter vorzugsweise auf das umlaufende Förderelement des Sammelausleitförderers 28 fallen. Alternativ könnten die ausgeleiteten Behälter bspw. auf einen Ausleitförderer der Behälterausleiteinrichtung fallen (z. B. den Ausleitförderer 66 - siehe Figur 2).

Die Ablenkungseinrichtung 104 kann dazu ausgebildet sein, von der Behälterausleiteinrichtung 36 transportierte, ausgeleitete Behälter zum Ablenken und Verlassen der Behälterausleiteinrichtung 36 zu beaufschlagen. Vorzugsweise können die so abgelenkten Behälter dann neben der Behälterausleiteinrichtung 36 oder dem Sammelausleitförderer 28 hinunterfallen, z. B. auf den Boden oder in eine Kiste.

Beispielsweise kann die Ablenkungseinrichtung 104 benachbart zu einem Behälterfreifallbereich 108 der Behälterausleiteinrichtung 36 zum Beaufschlagen der Behälter im freien Fall angeordnet sein. Der Behälterfreifallbereich 108 kann sich bspw. an einen Auslass (eine Ende) der Rutsche 40 anschließen.

Bevorzugt kann die Ablenkungseinrichtung 104 eine pneumatische oder elektromotorische Ablenkungseinrichtung sein.

Beispielsweise kann die Ablenkungseinrichtung 104 eine Druckluftdüse und eine Druckluftquelle aufweisen. Die Druckluftquelle kann mit der Druckluftdüse zum Zuführen von Druckluft zu der Druckluftdüse verbunden sein. Die Druckluftdüse kann so angeordnet sein, dass sie von der Behälterausleiteinrichtung 36 transportierte Behälter zum Ablenken von der Behälterausleiteinrichtung 36 mit Druckluft beaufschlagen kann. Beispielsweise kann die Druckluftdüse zum Ausgeben eines Druckluftstrahls in den Behälterfreifallbereich 108 angeordnet sein.

Beispielweise kann die Ablenkungseinrichtung mittels eines Elektromotors, vorzugsweise eines Servomotors, angetrieben sein. Beispielsweise kann die Ablenkungseinrichtung ein sogenannter Servopusher sein.

Alternativ kann beispielsweise eine mechanische Ablenkungseinrichtung umfasst sein. Diese kann beispielsweise eine verstellbare Weiche aufweisen, die die ausgeleiteten Behälter ablenken kann, wenn sie entsprechend betätigt ist.

Die Sensoreinrichtung 106 kann ein Behälterrückstau auf der jeweiligen Behälterausleiteinrichtung 36 erfassen. Beispielsweise kann die Sensoreinrichtung 106 eine optische oder eine taktile Sensoreinrichtung sein. Bevorzugt kann die Sensoreinrichtung 106 eine Lichtschranke oder einen Ultraschallsensor aufweisen. Die Sensoreinrichtung 106 kann bspw. benachbart zu dem Behälterfreifallbereich 108 oder einem Einlass des Sammelausleitförderers 28 oder einem Ausleitförderer der Behälterausleiteinrichtung 36 angeordnet sein.

Die Steuereinrichtung 110 kann abhängig von einer Signalausgabe der Sensoreinrichtung 106 die Ablenkungseinrichtung 104 betreiben. Bspw. kann die Steuereinrichtung 110 die Ablenkungseinrichtung 104 zum Ablenken von Behältern betreiben, wenn die Signalausgabe einen Behälterrückstau angibt.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration der Behälterbehandlungsvorrichtungen, des Behältertransportsystems, des Sammelausleitförderers und/oder der mehreren Behälterausleiteinrichtungen des unabhängigen Anspruchs 1 offenbart und beanspruchbar. Alle Bereichsangaben hierin sind derart offenbart und beanspruchbar zu verstehen, dass gleichsam alle in den jeweiligen Bereich fallenden Werte einzeln offenbart sind, z. B. auch als jeweils bevorzugte engere Außengrenzen des jeweiligen Bereichs.

**Bezugszeichenliste**

| | | | |
|---|---|---|---|
| 10 | Behälterbehandlungsanlage | 72 | Traggestell |
| 12 | Heizvorrichtung | 74 | Durchlass |
| 14 | Behälterherstellvorrichtung | 76 | (weiterer) Sammelausleitförderer |
| 16 | Behälteretikettiervorrichtung | 78 | (weitere) Behälterausleiteinrichtung |
| 18 | (erste) Behälterfüllvorrichtung | 80 | Verschlussausleiteinrichtung |
| 20 | (zweite) Behälterfüllvorrichtung | 82 | (weiteres) Traggestell |
| 22 | (erste) Behälterverschließvorrichtung | 84 | (weiterer) Durchlass |
| 24 | (zweite) Behälterverschließvorrichtung | 86 | Vorformling-Behälterförderer |
| | | 88 | Vorformling-Linearförderer |
| 26 | Behältertransportsystem | 90 | Traggestell |
| 28 | Sammelausleitförderer | 92 | Durchlass |
| 30 | Zerkleinerungseinrichtung | 94 | Klappe |
| 32 | Sammelauffangbehältnis | 96 | Sammelkiste |
| 34 | fahrerloses Transportfahrzeug | 98 | Schwenkachse |
| 36 | Behälterausleiteinrichtung | 100 | Antriebseinheit |
| 38 | Ausleitelement | 102 | Welle |
| 40 | Rutsche | 104 | Ablenkungseinrichtung |
| 42 | Einlaufförderer | 106 | Sensoreinrichtung |
| 44 | Einlaufförderer | 108 | Behälterfreifallbereich |
| 46 | Auslaufförderer | 110 | Steuereinrichtung |
| 48 | Verbindungsförderer | | |
| 50 | Verbindungsförderer | | |
| 52 | Verteilförderer | | |
| 54 | (erster) Verbindungsförderer | | |
| 56 | (zweiter) Verbindungsförderer | | |
| 58 | (erster) Ausgabeförderer | | |
| 60 | (zweiter / weiterer) Ausgabeförderer | | |
| 62 | Einhausung | | |
| 64 | Einhausung | | |
| 66 | Ausleitförderer | | |
| 68 | Horizontalachse | | |
| 70 | Verschlussausleiteinrichtung | | |

## Patentansprüche

1. Behälterbehandlungsanlage (10) aufweisend:
mehrere Behälterbehandlungsvorrichtungen (14 - 24) zum Behandeln der Behälter;
ein Behältertransportsystem (26), das die mehreren Behälterbehandlungsvorrichtungen (14 - 24) zum Transportieren der Behälter miteinander verbindet;
einen Sammelausleitförderer (28) mit einem umlaufenden Förderelement zum unterseitigen Abstützen von ausgeleiteten Behältern; und
mehrere Behälterausleiteinrichtungen (36), die den Sammelausleitförderer (28) mit mehreren Ausleitstellen des Behältertransportsystems (26) zum Empfangen von aus der jeweiligen Ausleitstelle des Behältertransportsystems (26) ausgeleiteten Behältern verbindet.

2. Behälterbehandlungsanlage (10) nach Anspruch 1, wobei mindestens eines erfüllt ist von:
die mehreren Behälterausleiteinrichtungen (36) sind voneinander beabstandet mit dem Sammelausleitförderer (28) verbunden;
die mehreren Ausleitstellen sind voneinander beabstandet;
die mehreren Behälterausleiteinrichtungen (36) weisen teilweise oder jeweils ein betätigbares Ausleitelement (38), vorzugsweise Pusher, Stößel oder Schieber, zum Ausleiten von Behältern aus dem Behältertransportsystem (26) auf; und
die mehreren Behälterausleiteinrichtungen (36) weisen teilweise oder jeweils eine Rutsche (40) zum Hinunterrutschen für die ausgeleiteten Behälter auf, vorzugsweise zum Rutschen auf das umlaufende Förderelement des Sammelausleitförderers (28).

3. Behälterbehandlungsanlage (10) nach Anspruch 1 oder Anspruch 2, ferner aufweisend:
ein Sammelauffangbehältnis (32), das mit dem Sammelausleitförderer (28) zum Empfangen der ausgeleiteten Behälter verbunden ist, wobei vorzugsweise das Sammelauffangbehältnis (32) mit einer Presse zum Verdichten der ausgeleiteten Behälter verbunden ist,
wobei die Behälterbehandlungsanlage (10) ferner mindestens eines aufweist von:
eine Zerkleinerungseinrichtung (30) zum Zerkleinern der ausgeleiteten Behälter, wobei die Zerkleinerungseinrichtung (30) mit dem Sammelausleitförderer (28) zum Empfangen der ausgeleiteten Behälter und mit dem Sammelauffangbehältnis (32) zum Ausgeben der zerkleinerten Behälter zu dem Sammelauffangbehältnis (32) verbunden ist; und
ein fahrerloses Transportfahrzeug (34), das zum Transportieren des Sammelauffangbehältnisses (32) konfiguriert ist.

4. Behälterbehandlungsanlage (10') nach einem der vorherigen Ansprüche, wobei:
die mehreren Behälterbehandlungsvorrichtungen (14 - 24) eine Behälterverschließvorrichtung (22, 24) zum Verschließen der Behälter mit Behälterverschlüssen aufweist;
die Behälterverschließvorrichtung (22, 24) eine Verschlussausleiteinrichtung (70, 80) zum Ausleiten von fehlerhaften oder unbenutzten Behälterverschlüssen aufweist; und
die Verschlussausleiteinrichtung (70, 80) mit dem Sammelausleitförderer (28) zum Ausleiten der fehlerhaften oder unbenutzten Behälterverschlüsse zu dem Sammelausleitförderer (28) verbunden ist, vorzugsweise über eine der mehreren Behälterausleiteinrichtungen (36).

5. Behälterbehandlungsanlage (10') nach einem der vorherigen Ansprüche, wobei:
mindestens eine der mehreren Behälterausleiteinrichtungen (36) einen Ausleitförderer (66) mit einem umlaufenden Förderelement zum unterseitigen Abstützen der ausgeleiteten Behälter aufweist; und
der Ausleitförderer (66) schwenkbar ist, vorzugsweise um eine Horizontalachse (68) zum Hochschwenken des Ausleitförderers (66) in eine Nichtbetriebsposition zum Ermöglichen eines Passierens des Ausleitförderers (66) bei einem Begehen der Behälterbehandlungsanlage (10').

6. Behälterbehandlungsanlage (10") nach einem der vorherigen Ansprüche, wobei:
mindestens eine der Behälterausleiteinrichtungen (36) eine schwenkbare Klappe (94) aufweist, mit der die ausgeleiteten Behälter wahlweise zu dem Sammelausleitförderer (28) oder einer Sammelkiste (96), bevorzugt unterhalb von der schwenkbaren Klappe (94), führbar sind,
wobei ferner vorzugsweise mindestens eines erfüllt ist von:
die schwenkbare Klappe (94) ist zum Schwenken motorisch angetrieben,
die schwenkbare Klappe (94) ist in eine Schwenkstellung schwenkbar, in der sie das umlaufende Förderelement des Sammelausleitförderers (28) abdeckt und einen Behälterpfad zu der Sammelkiste (96) freigibt;
die schwenkbare Klappe (94) ist in eine Schwenkstellung schwenkbar, in der sie das umlaufende Förderelement des Sammelausleitförderers (28) freigibt und einen Behälterpfad zu der Sammelkiste (96) blockiert; und
die die schwenkbare Klappe (94) aufweisende Behälterausleiteinrichtung (36) ist einer Behälterherstellvorrichtung (14) der mehreren Behälterbehandlungsvorrichtungen (14 - 24) zugeordnet.

7. Behälterbehandlungsanlage (10) nach einem der vorherigen Ansprüche, wobei:
die mehreren Behälterausleiteinrichtungen (36) mindestens eine Rückstauausleiteinrichtung aufweisen, die zum Ausleiten von sich im Behältertransportsystem (26) aufgestauten Behältern zu dem Sammelausleitförderer (28) ausgebildet ist,
wobei vorzugsweise mindestens eines erfüllt ist
die Rückstauausleiteinrichtung ist seitlich neben dem Behältertransportsystem (26) und dem Sammelausleitförderer (28) angeordnet;
die Rückstauausleiteinrichtung öffnet sich trichterförmig hin zu dem Behältertransportsystem (26); und
im Bereich der Rückstauausleiteinrichtung ist das Behältertransportsystem (26) oberhalb von dem Sammelausleitförderer (28) angeordnet.

8. Behälterbehandlungsanlage (10) nach einem der vorherigen Ansprüche, wobei:
mindestens eine der mehreren Behälterausleiteinrichtungen (36) eine, vorzugsweise pneumatische oder elektromotorische, Ablenkungseinrichtung (104) aufweist, die dazu ausgebildet ist, von der jeweiligen Behälterausleiteinrichtung (36) transportierte Behälter zum Ablenken von der jeweiligen Behälterausleiteinrichtung (36) zu beaufschlagen, vorzugsweise zum Hinunterfallen von der jeweiligen Behälterausleiteinrichtung (36);
eine Sensoreinrichtung (106) zum Erfassen eines Behälterrückstaus auf der jeweiligen Behälterausleiteinrichtung (36); und
eine Steuereinrichtung (110), die dazu konfiguriert ist, die Ablenkungseinrichtung (104) abhängig von einer Signalausgabe der Sensoreinrichtung (106) zu betreiben, wobei vorzugsweise:
die Ablenkungseinrichtung (104) benachbart zu einem Behälterfreifallbereich (108) der jeweiligen Behälterausleiteinrichtung (36) zum Beaufschlagen der Behälter im freien Fall angeordnet ist,
wobei bevorzugt:
der Behälterfreifallbereich (108) sich an einen Auslass einer Rutsche (40) der jeweiligen Behälterausleiteinrichtung (36) anschließt.

9. Behälterbehandlungsanlage (10) nach einem der vorherigen Ansprüche, ferner aufweisend:
eine Einhausung (62, 64), in der mindestens eine der mehreren Behälterbehandlungsvorrichtungen (14 - 24), vorzugsweise eine Behälterherstellvorrichtung (14) und/oder eine Behälterfüllvorrichtung (18, 20) und/oder eine Behälterverschließvorrichtung (22, 24), angeordnet ist,
wobei:
die Einhausung (62, 64) einen Durchlass (74, 84, 92) aufweist; und
ein Behälterförderer des Behältertransportsystems (26) und der Sammelausleitförderer (28) den Durchlass (74, 84, 92) passieren.

10. Behälterbehandlungsanlage (10) nach Anspruch 9, wobei ferner mindestens eines erfüllt ist von:
der Sammelausleitförderer (28) verläuft im Bereich des Durchlasses (74, 84, 92) parallel zu dem Behälterförderer, vorzugsweise parallel neben, parallel über oder parallel unter dem Behälterförderer;
der Sammelausleitförderer (28) und der Behälterförderer teilen sich ein gemeinsames Traggestell (72, 82, 90); und
der Behälterförderer ist oberhalb von dem Sammelausleitförderer (28) angeordnet und eine der mehreren Behälterausleiteinrichtungen (36) ist eine Rückstauausleiteinrichtung, die mit dem Sammelausleitförderer (28) zum Ausleiten von sich auf dem Behälterförderer rückstauenden Behältern zu dem Sammelausleitförderer (28) verbunden ist.

11. Behälterbehandlungsanlage (10") nach Anspruch 9 oder Anspruch 10, wobei:
die mehreren Behälterbehandlungsvorrichtungen (14 - 24) eine Behälterherstellvorrichtung (14), vorzugsweise eine Behälterblasvorrichtung, aufweisen, die in der Einhausung (62) angeordnet ist; und
das Behältertransportsystem (26) aufweist:
- einen Einlaufförderer (44), vorzugsweise Einlauftransportstern, wobei der Einlaufförderer (44) in der Einhausung (62) angeordnet ist, eine der mehreren Ausleitstellen aufweist und mit der Behälterherstellvorrichtung (14) zum Fördern von Vorformling-Behältern zu der Behälterherstellvorrichtung (14) verbunden ist;
- einen Auslaufförderer (46), vorzugsweise Auslauftransportstern, wobei der Auslaufförderer (46) in der Einhausung (62) angeordnet ist, eine weitere der mehreren Ausleitstellen aufweist und mit der Behälterherstellvorrichtung (14) zum Abtransportieren von Behältern von der Behälterherstellvorrichtung (14) verbunden ist;
wobei vorzugsweise:
der den Durchlass (92) passierende Behälterförderer ein Vorformling-Behälterförderer (86) ist, der behälterstromaufwärts von dem Einlaufförderer (44) angeordnet ist.

12. Behälterbehandlungsanlage (10) nach Anspruch 9 oder Anspruch 10, ferner aufweisend:
einen weiteren Sammelausleitförderer (76) mit einem umlaufenden Förderelement zum unterseitigen Abstützen von ausgeleiteten Behältern,
mehrere weitere Behälterausleiteinrichtungen (78), die den weiteren Sammelausleitförderer (76) mit mehreren weiteren Ausleitstellen des Behältertransportsystems (26) zum Empfangen von aus der jeweiligen weiteren Ausleitstelle des Behältertransportsystems (26) ausgeleiteten Behältern verbindet,
wobei vorzugsweise ferner mindestens eines erfüllt ist von:
die mehreren weiteren Behälterausleiteinrichtungen (78) sind voneinander beabstandet mit dem weiteren Sammelausleitförderer (76) verbunden;
die mehreren weiteren Ausleitstellen sind voneinander beabstandet;
die mehreren weiteren Behälterausleiteinrichtungen (78) weisen teilweise oder jeweils ein betätigbares Ausleitelement (38), vorzugsweise Pusher, Stößel oder Schieber, zum Ausleiten von Behältern aus dem Behältertransportsystem (26) auf; und
die mehreren weiteren Behälterausleiteinrichtungen (78) weisen teilweise oder jeweils eine Rutsche (40) zum Hinunterrutschen für die ausgeleiteten Behälter auf, vorzugsweise zum Rutschen auf das umlaufende Förderelement des weiteren Sammelausleitförderers (76).

13. Behälterbehandlungsanlage (10) nach Anspruch 12, wobei:
die Einhausung (64) einen weiteren Durchlass (84) aufweist; und
ein weiterer Behälterförderer des Behältertransportsystems (26) und der weitere Sammelausleitförderer (76) den weiteren Durchlass (84) passieren,
wobei vorzugsweise ferner mindestens eines erfüllt ist:
der weitere Sammelausleitförderer (76) verläuft im Bereich des weiteren Durchlasses (84) parallel zu dem weiteren Behälterförderer, bevorzugt parallel neben, parallel über oder parallel unter dem weiteren Behälterförderer;
der weitere Sammelausleitförderer (76) und der weitere Behälterförderer teilen sich ein gemeinsames Traggestell (82);
der weitere Behälterförderer ist oberhalb von dem weiteren Sammelausleitförderer (76) angeordnet und eine der mehreren weiteren Behälterausleiteinrichtungen (78) ist eine Rückstauausleiteinrichtung, die mit dem weiteren Sammelausleitförderer (76) zum Ausleiten von sich auf dem weiteren Behälterförderer rückstauenden Behältern zu dem weiteren Sammelausleitförderer (76) verbunden ist.

14. Behälterbehandlungsanlage (10) nach Anspruch 12 oder 13, wobei:
die mehreren Behälterbehandlungsvorrichtungen (14 - 24) eine erste Behälterfüllvorrichtung (18), eine zweite Behälterfüllvorrichtung (20), eine erste Behälterverschließvorrichtung (22) und eine zweite Behälterverschließvorrichtung (24) aufweisen, die in der Einhausung (64) angeordnet sind.

15. Behälterbehandlungsanlage (10) nach Anspruch 14, wobei ferner mindestens eines erfüllt ist von:
das Behältertransportsystem (26) weist einen Verteilförderer (52), vorzugsweise Verteiltransportstern, auf, der in der Einhausung (64) zum Aufteilen von Behältern auf die erste Behälterfüllvorrichtung (18) und die zweite Behälterfüllvorrichtung (20) angeordnet ist und eine der mehreren Ausleitstellen aufweist;
das Behältertransportsystem (26) weist einen ersten Verbindungsförderer (54), vorzugsweise Verbindungstransportstern, auf, der in der Einhausung (64) angeordnet ist und die erste Behälterfüllvorrichtung (18) und die erste Behälterverschließvorrichtung (22) verbindet und eine der mehreren Ausleitstellen aufweist;
das Behältertransportsystem (26) weist einen zweiten Verbindungsförderer (56), vorzugsweise Verbindungstransportstern, auf, der in der Einhausung (64) angeordnet ist und die zweite Behälterfüllvorrichtung (20) und die zweite Behälterverschließvorrichtung (24) verbindet und eine der mehreren weiteren Ausleitstellen aufweist;
das Behältertransportsystem (26) weist einen ersten Ausgabeförderer (58), vorzugsweise Linearausgabeförderer, auf, der in der Einhausung (64) angeordnet ist, mit der ersten Behälterverschließvorrichtung (22) zum Empfangen von verschlossen Behältern verbunden ist und eine der mehreren Ausleitstellen aufweist;
das Behältertransportsystem (26) weist einen zweiten Ausgabeförderer (60), vorzugsweise Linearausgabeförderer, auf, der in der Einhausung (64) angeordnet ist, mit der zweiten Behälterverschließvorrichtung (24) zum Empfangen von verschlossen Behältern verbunden ist und eine der mehreren weiteren Ausleitstellen aufweist;
die erste Behälterverschließvorrichtung (22) weist eine Verschlussausleiteinrichtung (70) zum Ausleiten von fehlerhaften oder unbenutzten Behälterverschlüssen auf, die mit dem Sammelausleitförderer (28) zum Ausleiten der fehlerhaften oder unbenutzten Behälterverschlüsse zu dem Sammelausleitförderer (28) verbunden ist; und
die zweite Behälterverschließvorrichtung (24) weist eine Verschlussausleiteinrichtung (80) zum Ausleiten von fehlerhaften oder unbenutzten Behälterverschlüssen auf, die mit dem weiteren Sammelausleitförderer (76) zum Ausleiten der fehlerhaften oder unbenutzten Behälterverschlüsse zu dem weiteren Sammelausleitförderer (76) verbunden ist.
